# EUROPEAN PATENT APPLICATION

(11) **EP 4 760 480 A1**
(43) Date of publication of application: **17.06.2026**
(21) Application number: 23937793.0
(22) Date of filing: 01.11.2023
(51) Int. Cl.: G06F 3/16

(54) **AUDIO DATA PROCESSING METHOD, SYSTEM ON CHIP, ELECTRONIC DEVICE, AND STORAGE MEDIUM**

(30) Priority: 07.08.2023 CN 202310988822
(71) Applicant: ECARX TECHNOLOGY PTE. LTD., Singapore 048580 (SG)
(72) Inventor: XU, Lijun, Wuhan, Hubei 430056 (CN); XIANG, Qingbao, Wuhan, Hubei 430056 (CN)
(74) Representative: Santarelli
(86) International application number: PCT/CN2023/129075
(87) International publication number: WO 2025/030691

(57) **Abstract**

A method and an apparatus for processing audio data applied to a system-on-chip with a built-in high fidelity digital signal processor, the method includes: obtaining (101) audio data from a sound card device; transmitting the audio data to the high fidelity digital signal processor, and processing (102) the audio data by using the high fidelity digital signal processor; transmitting (103) the processed audio data to an external audio device by using an audio interface of the system-on-chip.

## Description

This application claims priority to Chinese Patent Application No. 202310988822.4 filed on August 07, 2023, which is hereby incorporated in the present application by reference in its entirety.

### TECHNICAL FIELD

The present application relates to the field of data processing technologies, for example, to a method for processing audio data and a system-on-chip, an electronic device and a computer readable storage medium.

### BACKGROUND

With an increasing dependence on cars in modern society, cars are not only a means of transportation for daily travelling, but also provide passengers with various functions such as entertainment, access to information and social interaction.

In terms of audio experience, there has also been a significant increase in user's requirement. In the past, after a simple two-sound channel audio output is processed through a digital signal processor (Digital Signal Processor, DSP), to expand to a four-sound channel output, it can meet the requirements of car audio for music entertainment. However, audio systems in high-end cars have evolved to support multiple sound channels (such as 5.1 surround sound channel, 7.1 surround sound channel, and even 7.1.4 surround sound channel), requiring more than 10 independent audio channel outputs. The system-on-chip (System On a Chip, SOC) used in a car audio system requires higher audio channel numbers and greater audio data transmission capabilities. Meanwhile, high fidelity audio processing of a large number of independent sound channels also puts forward higher requirements for the number of DSP interfaces and the capability of audio processing algorithms in the car audio system. In order to achieve multi-sound channels high fidelity audio processing, the car audio system need to use a high-end DSP with more powerful performance, but it also means that the cost of car audio system will increase significantly.

### SUMMARY

An embodiment of the present application provides a method for processing audio data and a system-on-chip capable of processing audio data.

An embodiment of the present application discloses a method for processing audio data, which is applied to a system-on-chip with a built-in high fidelity digital signal processor, the method includes:
obtaining audio data from a sound card device;
transmitting the audio data to the high fidelity digital signal processor, and processing the audio data by using the high fidelity digital signal processor;
transmitting the processed audio data to an external audio device by using an audio interface of the system-on-chip.

An embodiment of the present application also discloses a method for processing audio data, which is applied to a system-on-chip with a built-in high fidelity digital signal processor, the method includes:
obtaining audio data from an external audio device by using an audio interface of the system-on-chip;
transmitting the audio data to the high fidelity digital signal processor, and processing the audio data by using the high fidelity digital signal processor; and
transmitting the processed audio data to a sound card device.

An embodiment of the present application also discloses a system-on-chip, a high fidelity digital signal processor is built in the system-on-chip, the system-on-chip is configured to receive audio data from a sound card device, process the audio data by using the high fidelity digital signal processor, and transmit the processed audio data to an external audio device.

An embodiment of the present application also discloses an electronic device, which including:
at least one processor; and
at least one machine readable medium storing an instruction, in a case where the stored instruction is executed by the at least one processor, enables the at least one processor to execute the above method for processing audio data .

An embodiment of the present application also discloses a computer readable storage medium with a computer program stored thereon, configured to enable a processor to execute the above method for processing audio data when the computer program is executed by a processor.

### BRIEF DESCRIPTION OF DRAWINGS

FIG. 1 is a process flowchart of a method for processing audio data of an embodiment of the present application.
FIG. 2 is a process flowchart of another method for processing audio data of an embodiment of the present application.
FIG. 3 is a structural schematic diagram of a car audio system of an embodiment of the present application.
FIG. 4 is a data link schematic diagram of a car audio system of an embodiment of the present application.
FIG. 5 is a structural block diagram of a system-on-chip of an embodiment of the present application.
FIG. 6 is a structural block diagram of an apparatus for processing audio data of an embodiment of the present application.
FIG. 7 is a structural schematic diagram of an electronic device of a method for processing audio data of an embodiment of the present application.

### DESCRIPTION OF EMBODIMENTS

The present application is further detailed explained below combining with the drawings and specific embodiments.

A scheme for processing audio data provided by an embodiment of the present application is applied to a system-on-chip (SOC) with a built-in high fidelity HIFI (High Fidelity, HIFI) digital signal processor. An embodiment of the present application provides a low cost and high performance scheme for a car audio system, which processing audio data by using a high fidelity digital signal processor integrated within the system-on-chip. In this scheme, the system-on-chip with a built-in high fidelity digital signal processor processes audio data, eliminating a requirement for an external independent digital signal processor. The high fidelity digital signal processor has a strong performance, which can meet requirements of high fidelity and multi-sound channel audio processing for the car audio. The high fidelity digital signal processor is built in the system-on-chip and can directly connect an external audio device through an audio interface provided by the system-on-chip, simplifying the structure and improving operating efficiency.

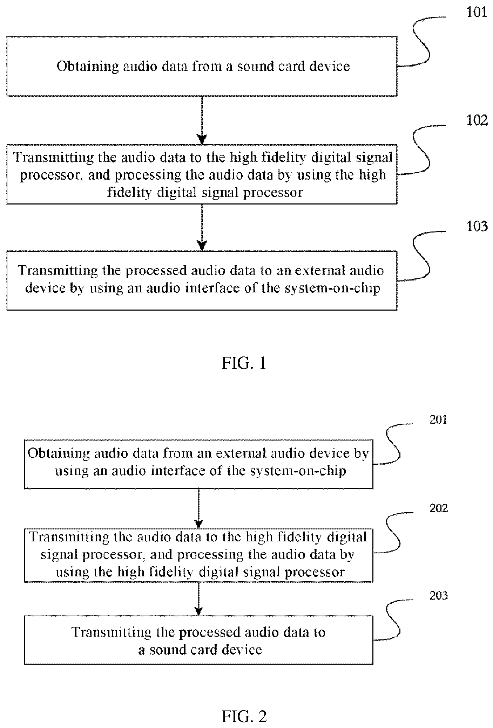

Referring to Fig. 1, a process flowchart of a method for processing audio data of an embodiment of the present application is shown. The method for processing audio data can be applied to a system-on-chip with a built-in high fidelity digital signal processor. Where, the system-on-chip can communicate with a sound card device and an external audio device respectively. The method for processing audio data specifically may include the following steps:
Step 101, obtaining audio data from a sound card device.

In an embodiment of the present application, audio data is firstly required to be obtained from a sound card device. The sound card device is a hardware device configured to input and output an audio signal in a computer or other device. It can be achieved through recording function or conversion function of the sound card device for obtaining audio data, which can convert sound from a microphone or other audio sources into a digital audio signal, that is, audio data. The system-on-chip can communicate with the sound card device through operating system calls or drive programs to request obtaining the audio data. Alternatively, the sound card device can push the audio data to the system-on-chip. In practical applications, the sound card device can receive an analog audio signal from an audio source (for example a microphone, a line input, etc.). The sound card device converts an analog audio signal into a digital audio signal, which, specifically, can convert a continuous analog audio signal to a discrete digital audio signal using an analog-to-digital converter (Analog-to-Digital Converter, ADC). The audio data obtained by the system-on-chip can be cached to prepare for transmission to subsequent processing steps.

Step 102, transmitting the audio data to a high fidelity digital signal processor, and processing the audio data by using the high fidelity digital signal processor.

In an embodiment of the present application, the audio data obtained in the step 101 is transmitted to a high fidelity digital signal processor for processing. A high fidelity digital signal processor is a chip specially used for processing audio, which can perform a variety of processing on an audio signal, such as equalization, filtering, reverberation, etc., to achieve an enhancement or optimization for audio effect. The high fidelity digital signal processor receives the audio data and process the audio signal according to a preset processing algorithm, such as sound effect enhancement, denoising, audio balance, etc. The processed audio data is cached or output directly to be prepared for transmission to subsequent step.

Step 103, transmitting the processed audio data to an external audio device by using an audio interface of the system-on-chip.

In an embodiment of the present application, the processed audio data in the step 102 is transmitted to the external audio device by the audio interface of the system-on-chip. A system-on-chip is a highly integrated chip that usually contains a variety of functional modules, including an audio interface. The audio interface of the system-on-chip converts the processed audio data into a signal format suitable for the external audio device, such as the analog audio signal or the digital audio signal. The converted audio signal is output to the external audio device, such as a speaker, a headphone, an audio amplifier, etc., through the audio interface of the system-on-chip.

A scheme for processing audio data provided by an embodiment of the present application is applied to a system-on-chip SOC with a built-in high fidelity digital signal processor. The system-on-chip can communicate with the sound card device and the external audio device respectively. The system-on-chip obtains audio data from the sound card device, then transmits the audio data to a high fidelity digital signal processor, and processes the audio data by using the high fidelity digital signal processor, and then transmits the processed audio data to the external audio device by using the audio interface of the system-on-chip.

In an embodiment of the present application, by using the high fidelity digital signal processor integrated within the system-on-chip, an independent external digital signal processor is avoid to add, and material cost of an additional digital signal processor is saved. The high fidelity digital signal processor is integrated within the system-on-chip, eliminating the requirement for external connection and simplifying a system structure. Compared with an ordinary digital signal processor, the high fidelity digital signal processor has more powerful computing processing capability, faster clock speed, and supports more complex audio algorithms. The high fidelity digital signal processor natively has a high sampling rate, a multi-channel audio processing, and a stronger performance to meet requirements of a high fidelity multi-sound channel audio for processing capability. the high fidelity digital signal processor is built in the system-on-chip, and can be directly connected to an external device through the audio interface of the system-on-chip, reducing complexity of additional wiring and port connections between the system-on-chip and the external device.

In an exemplary embodiment of the present application, an implementation of transmitting the audio data to the high fidelity digital signal processor is routing the audio data to the high fidelity digital signal processor through an inter-process communication (Inter-Process Communication, IPC) mechanism. The inter-process communication mechanism is a technology used in an operating system for data transfer and exchange between different processes. In a multi-task operating system, different processes (or threads) may need to cooperate with each other, share data with each other or communicate with each other, and then it is needed to use the inter-process communication mechanism to realize data transfer and interaction between processes. The inter-process communication mechanism provides a variety of means to implement communication of inter-process, and common inter-process communication mechanisms include:
Pipe (Pipe): a one-way communication mechanism, usually used to communicate between processes that have a parent-child process relationship.
Named Pipe (Named Pipe): similar to a pipe, but allowing unrelated processes to communicate.
Message Queue (Message Queue): transmitting data through a message queue, and allowing multiple processes to read and write messages in a queue.
Shared Memory (Shared Memory): multiple processes share the same memory area to enable efficient data sharing.
Semaphore (Semaphore): used for inter-process synchronization to prevent race conditions and resource contention.
Signal (Signal): used to notify and handle asynchronous events between processes.
Socket (Socket): used for process communication between different computers, usually for network communication, but can also be used for process communication within the same computer.

These inter-process communication mechanisms enable processes to work together in a coordinated manner, thereby improving overall efficiency and flexibility of a system. A choice of the inter-process communication mechanism depends on requirements and design of an application program.

In a practical application scenario, audio data needs to be obtained from a source (such as the sound card device, the external audio source, etc.) and is transmitted to a high fidelity digital signal processor for processing to achieve an enhancement or optimization for audio effect. In order to efficiently transmit audio data to a high fidelity digital signal processor, an inter-process communication mechanism is used. Here, the inter-process communication mechanism is used to transmit audio data from one process (such as a process of an audio data source) to another process (a process of a high fidelity digital signal processor). In this way, two independent processes can work together to process audio data and optimize audio effect.

For example: it is supposed that there is a music player application, which is responsible for obtaining audio data from a music file and needs to process the audio data, sound effects such as equalization and reverberation etc., to provide a better audio experience. In addition, there is a dedicated high fidelity digital signal processor in a system, which has an excellent audio processing capability. In order to implement sound effect processing, audio data needs to be transmitted between these two processes. Through the inter-process communication mechanism, the music player application can transmit the audio data obtained from the music file to the high fidelity digital signal processor. The high fidelity digital signal processor receives the audio data and processes the audio according to a preset sound effect algorithm. The processed audio data is then returned to the music player application through the inter-process communication mechanism, and then output to an external audio device, such as the speaker or the headphone, through the audio interface of the system. In an embodiment of the present application, a highly customized and optimized for audio processing can be realized by routing the audio data to the high fidelity digital signal processor through the inter-process communication mechanism. The high fidelity digital signal processor can apply professional-grade audio algorithms to process the audio data with high quality, thus providing more realistic and beautiful audio effects. In this way, users can enjoy a better audio experience when using a music player or other audio applications, and it improves the audio recovery ability and sound quality, and enhances user satisfaction with audio products.

In an exemplary embodiment of the present application, an implementation of transmitting the processed audio data to the external audio device by using the audio interface of the system-on-chip is transmitting the processed audio data to the external audio device by using a time division multiplexing (Time Division Multiplexing, TDM) interface and/or an inter-IC sound (integrated interchip sound, IIS) interface of the system-on-chip. Where, the time division multiplexing is a multiplexing technique used to transmit multiple signals on a single communication channel. Through the time division multiplexing interface, different data streams are alternately transmitted in an order of predetermined a time slice (a time period), so as to achieve data multiplexing and transmission. In a time division multiplexing interface, each device participating in the communication is assigned a specific time slice within which the device sends or receives data. Because the data is alternately transmitted according to the time slice, the data streams of different devices can be separated according to time information at the receiving end, so as to achieve data multiplexing and separation. The time division multiplexing interface is widely used in many fields, especially in a digital communication field and an audio field. In digital communication, the time division multiplexing interface can be used to transmit multiple data streams simultaneously on digital transmission lines to improve the utilization of communication bandwidth. In an audio field, the time division multiplexing interface is often used for connection between an audio codecs, allowing multiple audio signals to be multiplexed and transmitted on the same transmission line. The implementation of time division multiplexing interface requires a consistent time allocation and synchronization between devices to ensure that data is transmitted according to a correct time slice. A high-precision clock synchronization technology is usually used in modern communication and an audio device to ensure reliability and stability of the time division multiplexing interface. An inter-IC sound is a standard interface protocol for communication between audio devices, mainly used to transmit audio data between integrated circuits. An inter-IC sound (Inter-IC Sound, I2S) interface usually consists of multiple signal lines, including the following lines:
1. Clock (Serial Clock, SCK) Signal Line: used to synchronize a transmission of audio data and determine a clock edge between data bits.
2. Frame Synchronization (Word Select, WS) Signal Line: used to indicate start and end of audio data.
3. Data (Serial Data, SD) Line: a bit stream that transmits audio data.

The inter-IC sound interface adopts synchronous serial transmission mode, and the audio data is transmitted through a data line under the synchronization of the clock signal. The Frame synchronization signal is used to identify frame boundaries of the audio data to ensure correct parsing and transmission of the data.

The inter-IC sound interface is widely used in many audio devices, such as audio codecs, digital signal processors, audio codec modules and so on. It is a low cost and high efficiency audio interface, widely used in audio data transmission and processing. Meanwhile, due to compatibility of the inter-IC sound interface between different chips and devices, audio devices from different manufacturers can conveniently connect and interact with each other.

The above external audio devices may include at least one of the following: a bluetooth (Bluetooth, BT) device, a tuner Tuner, an audio to bluetooth transceiver (Audio to Bluetooth Transceiver, A2B Transceiver), and an amplifier (amplifier, AMP). Where, the bluetooth (Bluetooth) is a wireless communication technology used to transmit data and connect different types of devices over short distances. Bluetooth technology is mainly used to establish a wireless communication connection in a short distance range, usually around 10 meters, up to about 100 meters at most. It is suitable for connecting a variety of devices, such as a smartphone, a tablet, a headphone, a speaker, a keyboard, a mouse, a printer, a car system, a smart home device, etc. A tuner is an electronic device used to receive and tune radio frequency signals. It is commonly used in a television, a radio, a digital TV set-top box, a satellite receiver and other devices to receive and process radio signals with different frequencies and convert them into visual or audible contents. In different applications, the specific function and working principle of the tuner may be different. Here are some of functions of tuners in common applications:
1. TV tuner: a TV tuner is used to receive TV signals, which can be traditional analog TV signals or digital TV signals. In a digital television, a tuner is typically used to receive terrestrial, cable, or satellite digital television signals and convert them into video contents that can be displayed on a TV screen.
2. Radio tuner: a radio tuner is used to receive radio broadcast signals, which can be frequency modulation (Frequency Modulation, FM) broadcast or amplitude modulation (Amplitude Modulation, AM) broadcast. Through the tuner, users can select different broadcast channels and hear audio contents of the corresponding channel.
3. Digital TV set-top box tuner: a digital TV set-top box is usually equipped with multiple tuners for receiving digital TV signals of different frequencies and formats, so that users can watch programs from multiple channels.
4. Satellite receiver tuner: in a satellite television system, a tuner is used to receive signals from satellites and convert them into video contents that can be viewed on television.

Tuners play a key role in the above applications, allowing users to select and access different broadcast or video signals, thereby achieving diversified entertainment and information acquisition. With the development of technology, many tuners have been integrated within a multifunctional chip, becoming an integral part of modern electronic devices.

An audio to bluetooth audio transceiver is used to connect an audio device in a car to enable high-quality audio signal transmission and processing. It is widely used in a car audio system, providing excellent audio transmission performance and noise suppression capability to help achieve a better car audio experience.

An amplifier is an electronic device, which is used to increase an amplitude or power of a signal. In a circuit, the amplifier is often used to enhance an electrical signal, enabling it to drive output devices, such as a speaker or a headphone, to provide a higher volume or a stronger audio signal. The main function of the amplifier is to amplify an input signal, even if the input signal is weak or low level, the amplifier can convert it into a larger output signal. This makes the amplifier widely used in fields such as audio and wireless communication. The types and purposes of amplifiers vary, and common types of amplifiers include:
1. Audio power amplifier: used to enhance an audio signal and drive a speaker to produce sound.
2. Radio frequency amplifier: used to enhance a radio frequency signal in wireless communication, such as in a mobile phone, radio and satellite communication.
3. Differential amplifier: used to enhance differential signals, often used in a high-frequency circuit and a communication system.
4. Instrument amplifier: used to accurately amplify a weak signal of a measuring instrument.
5. Operational amplifier: used to achieve a variety of circuit functions, such as filtering, inverting, amplifying, etc.

Design and performance of the amplifier are critical to signal processing and audio quality, so a selection of the amplifier needs to be based on a specific application scenario and a requirement.

In an actual application scenario, the audio data after audio processing is output through the audio interface of the system-on-chip. If the time division multiplexing interface is used, the system-on-chip alternately transmits different audio data streams to the external audio device in an order of a time slice to achieve audio data multiplexing and transmission. If an inter-IC sound interface is used, the system-on-chip transmits audio data in serial mode to the external audio device. In an embodiment of the present application, by using a time-division multiplexing interface and/or an inter-IC sound interface of the system-on-chip, the processed audio data is transmitted to the external audio device, achieving efficient and stable audio data transmission. Both the time division multiplexing interface and the inter-IC sound interface have characteristics of high customization and low power consumption, which are suitable for audio data transmission requirements. In this way, the processed audio data can be quickly and accurately transmitted to the external audio device, enabling users to enjoy a high-quality audio experience. Meanwhile, the integration of the system-on-chip is high, reducing a number of external components and reducing complexity and cost of the system.

In an exemplary embodiment of the present application, audio data in the sound card device can be written to /dev/snd/card (in a Linux system, the /dev/snd directory is a virtual file directory of the audio device and is used to communicate with the sound card device; /dev/snd/card represents a card for the audio device, which can have multiple different sound card devices) sound card device located in the kernel through a standard advanced Linux sound architecture (Advanced Linux Sound Architecture, ALSA) audio interface function pcm_write (one of ALSA audio interface functions, used to write audio data to a pluse code modulation device, usually is an output end of the audio device). In an actual application, AudioFlinger (audio service) writes the audio data to the sound card device located in the kernel through the standard advanced Linux sound architecture audio interface function.

AudioFlinger is an important component in an Android (Android)operating system, which is a core part of an audio system and is responsible for managing and processing all audio data streams. In the Android system, audio playing, recording, calls, and other audio functions rely on AudioFlinger. AudioFlinger has the following key functions:
1. Audio data mixing: AudioFlinger is responsible for mixing audio data streams from different applications and then sends the mixed audio data to an audio output device, such as a speaker, to achieve to play audio from multiple applications simultaneously.
2. Audio routing: AudioFlinger decides which audio output device to route the audio data to, such as a speaker, a headset, a Bluetooth headset, etc., according to a configuration of a device and a setting of a user.
3. Audio effect processing: AudioFlinger supports audio effect processing, such as equalization, heavy bass enhancement, surround sound effect, etc., to improve audio quality and user experience.
4. Audio delay control: AudioFlinger ensures that audio data is synchronized between different audio data streams to avoid a delay phenomenon of audio playing.
5. Audio recording: AudioFlinger supports recording of audio data, allowing applications to record audio and perform subsequent processing.

With AudioFlinger, the Android system is able to provide powerful and flexible audio capabilities that enable applications to simultaneously process and manage audio data streams in a multitasking environment, thereby providing the user with a high-quality audio experience.

Referring to FIG. 2, a process flowchart of another method for processing audio data of an embodiment of the present application is shown. The method for processing audio data can be applied to a system-on-chip with a built-in high fidelity digital signal processor. Where, the system-on-chip can communicate with a sound card device and an external audio device respectively. The method for processing audio data specifically may include the following steps.

Step 201, obtaining audio data from the external audio device by using an audio interface of the system-on-chip.

In an embodiment of the present application, the system-on-chip is an integrated circuit with multiple functional modules, including an audio interface. In this embodiment, the audio interface of the system-on-chip is used to read audio data from the external audio device to achieve data transmission and processing. For example, a smartphone acts as a system-on-chip, which has a built-in audio interface. The external audio device can be a headset or a speaker, which may be connected to the audio interface of the smartphone. Through this audio interface, the smartphone can obtain audio data from the external audio device, for example music, voice, or other audio signals.

In a practical application scenario, an external audio device (such as a headset or a speaker) sends an audio signal to an audio interface of a system-on-chip. The audio interface of the system-on-chip converts the received audio signal into audio data. The obtained audio data is cached or transmitted to subsequent processing modules or applications, for example for audio playing, speech recognition, or other audio processing applications.

For example: in a case where connecting a headset to an audio jack of the smartphone, the audio interface of the system-on-chip (the smartphone) receives the audio signal from the headset and then converts it into audio data. These audio data can be transmitted to an audio processing module of the smartphone, then music or other audio contents can be output through the headset. In an embodiment of the present application, by using the audio interface of the system-on-chip to obtain the audio data from the external audio device, the smartphone or other system-on-chips will become more flexible and intelligent in an interaction with the external audio device. In this way, the user can enjoy a high-quality audio experience, and achieving functions such as music playing, voice calls, speech recognition and so on. In addition, an integrated audio interface also helps simplify system design and reduce additional connections and components, thereby improving performance and reliability of the overall system.

Step 202, transmitting the audio data to the high fidelity digital signal processor, and processing the audio data by using the high fidelity digital signal processor.

In an embodiment of the present application, an introduction of the Step 202 can be referred to the relevant instructions of the above Step 102 and will not be repeated here.

Step 203, transmitting the processed audio data to a sound card device.

In an embodiment of the present application, transmitting the processed audio data to the sound card device means that sending the processed digital audio data to a sound card in a computer or a device, for audio output or other subsequent processing.

For example, it is supposed that running an audio editing software on the computer to mix and trim the recorded audio files. The processed audio data needs to be output through the sound card of the computer in order to hear a processed audio effect through a connected speaker or a headset. In this example, transmitting the processed audio data to the sound card device is to achieve a final output of the audio. In an embodiment of the present application, after transmitting the processed audio data to the sound card device, the user can hear the processed audio effect through a connected speaker, headphone or loudspeaker box, thereby providing a better audio experience. If audio processing is performed in real time, such as in a voice call or a game, transmitting the processed audio data to the sound card can display audio effect in real time, enabling the user to hear real-time changes and optimizations. After transmitting the processed audio data to the sound card device, the audio output can be adjusted and optimized using the sound card device, such as volume control, a sound effect setting, etc., to enhance the personalized experience of the user. The transmission of the processed audio data to the sound card device is to truly present the processed audio effects to the user, providing a better audio experience and interaction.

In an exemplary embodiment of the present application, an implementation of obtaining the audio data from the external audio device using the audio interface of the system-on-chip, is obtaining the audio data from the external audio device by using a time division multiplexing TDM interface and/or an inter-IC sound IIS interface of the system-on-chip. Where, the external audio device includes at least one of the following: a bluetooth BT device, a tuner Tuner, an audio to bluetooth audio transceiver A2B Transceiver, and an amplifier AMP.

In a practical application scenario, the system-on-chip has an audio interface for communication with the external audio device. The system-on-chip may be a highly integrated chip, such as a smartphone, an audio processor, etc., with multiple functional modules, including an audio interface. The time division multiplexing interface allows that multiple signals are transmitted on a same physical communication line. Here, the time division multiplexing interface is used to transfer different audio data streams from the external audio device to the system-on-chip alternately in an order of a time slice. The inter-IC sound interface is an audio serial interface protocol used to transmit audio data between integrated circuits. Through the inter-IC sound interface, the system-on-chip can obtain the audio data from the external audio device. The external audio device (such as a headphone, a loudspeaker box, etc.) sends the audio data to the system-on-chip through the time division multiplexing interface and/or the inter-IC sound interface. The time division multiplexing interface and/or inter-IC sound interface of the system-on-chip receive audio data from the external audio device and convert it into digital audio data. The obtained digital audio data can be cached or transmitted to subsequent audio processing modules or applications for audio effect enhancement, output, or other applications.

For example: an intelligent audio processor used as the system-on-chip is connected with a microphone of the external audio device through the inter-IC sound interface. The microphone collects the sound and transmits an analog audio signal to an intelligent audio processor. The inter-IC sound interface of the intelligent audio processor receives and converts the analog audio signal to digital audio data. These digital audio data can be denoised, enhanced or other processed through an audio processing algorithm and finally achieving clear speech recognition or other audio applications. The system-on-chip in an embodiment of the present application can obtain the audio data from different external audio devices, thereby achieving the acquisition and processing of multi-source audio data. Both the time division multiplexing interface and the inter-IC sound interface have efficient audio data transmission capability, which can realize fast and stable audio data transmission. After obtaining external audio data, the system-on-chip can perform a variety of processing through the audio processing algorithm, such as noise reduction, enhancement, reverberation, etc., to achieve a high-quality audio effect. By obtaining the external audio data, the system-on-chip can be applied to various application scenarios, such as speech recognition, audio recording, calls, music playing and so on, providing a rich audio experience.

In an exemplary embodiment of the present application, an implementation of transmitting the audio data to the high fidelity digital signal processor is routing the audio data to the high fidelity digital signal processor through an inter-process communication IPC mechanism. The detailed description of the embodiment can refer to the relevant contents in the above embodiment, and will not be repeated here.

In an exemplary embodiment of the present application, the audio data in the sound card device is read from the sound card device located in the kernel through a standard advanced Linux sound architecture audio interface function. The detailed description of the embodiment can refer to the relevant contents in the above embodiment, and will not be repeated here.

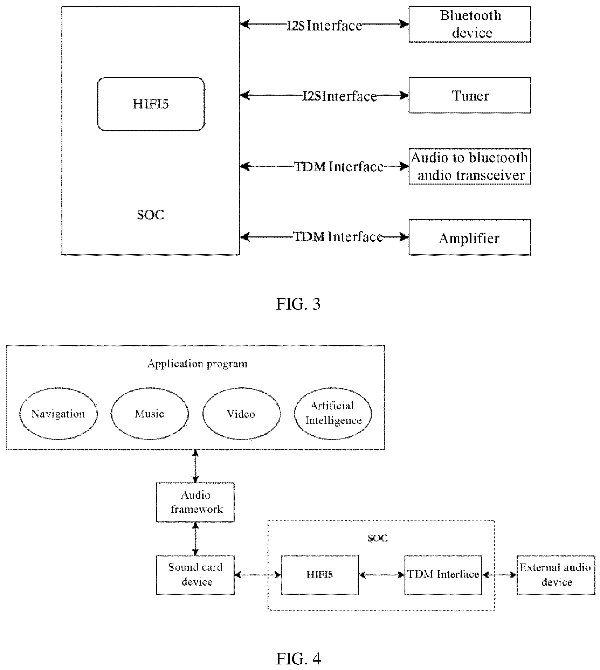

Based on the above description of an embodiment of a method for processing audio data, a car audio system is described below. Referring to Fig. 3, a structural schematic diagram of the car audio system of an embodiment of the present application is shown. The car audio system is based on a SOC with built-in HIFI5. The SOC with built-in HIFI5 implements audio components such as audio mixing, audio selector, and resampling into built-in HIFI5, which is used to replace an external digital signal processor. In addition, the SOC with built-in HIFI5 can connect with the external audio devices such as a bluetooth device, a tuner, an audio to bluetooth audio transceiver, an amplifier, and other audio devices through audio interfaces (TDM interface and I2S interface). The audio data is sent and received through the audio interface, and the audio data is processed by HIFI5.

Upper level audio logic of a software of the car audio system is consistent with a scheme of an external DSP, and overall development of the upper level is not sensible, which is only a difference in the implementation of the underlying audio. A data stream of the car audio system is from application (Application, APP) -> AudioFramework (AudioFramework, FWK) -> Sound card (driver) ->HIFI5->TDM interface /I2S interface -> External audio device.

Referring to Fig. 4, a data link schematic diagram of a car audio system of an embodiment of the present application is shown.

In Fig. 4, the car audio system can realize audio playing and audio acquisition.

On the one hand, the car audio system realizes audio playing.

Applications (such as navigation, music, video, artificial intelligence, etc.) transmit the audio data to the car audio system through an audio framework (such as AudioFlinger of Android).

The audio card device routes the audio data to HIFI5 of the SOC through IPC mechanism, and the audio data, after being processed by HIFI5, is output to the external audio device through the TDM interface of the SOC.

On the other hand, the car audio system achieves audio acquisition.

The external audio device transmits the audio data to HIFI5 of the SOC through the TDM interface of the SOC. HIFI5 processes the audio data and transmits the processed audio data to the sound card device through the IPC mechanism. AudioFlinger reads the audio data from the sound card device using the ALSA audio interface function pcm_write. The Application obtains the audio data by using an application programming interface (Application Programming Interface, API) of the AudioFlinger.

The car audio system of an embodiment of the present application, can realize mixing and processing of multi-channel audio data by using an audio core component AudioFlinger of Android operating system, thus providing a high-quality audio experience. The user can simultaneously play audio from different applications (navigation, music, video, etc.) without noise or delay. With an audio routing function of AudioFlinger, the car audio system can route audio data to different audio output devices, such as a speaker, a headset, a bluetooth headset, etc., according to the configuration of the device and the setting of the user. This provides flexibility and scalability, allowing the user to choose audio output devices according to his preferences and requirements. AudioFlinger supports audio effect processing, for example equalization, heavy bass enhancement, surround sound effect, etc., to improve audio quality and user experience. The car audio system can customize the audio effect according to the preferences of the user and environment, so that the user can get a more personalized audio experience. Through ALSA audio interface function pcm_write and IPC mechanism, audio data is transmitted efficiently in the system, which ensures the real-time and stability of audio data. This enables the car audio system to process audio data in real time, avoiding a delay phenomenon of audio playing and providing a smoother audio experience. In addition to audio playing, audio acquisition function is also realized. The external audio device transmits the audio data to HIFI5 through the TDM interface. After processing, the audio data is transmitted to the sound card device through the IPC mechanism, then AudioFlinger obtains the audio data through the ALSA audio interface function pcm_write. This enables the car audio system to achieve audio data recording and subsequent processing, such as speech recognition, calls and other applications.

In summary, the car audio system of an embodiment of the present application realizes high-quality audio playing and flexible audio processing capabilities of the car audio system by utilizing the audio core component AudioFlinger of Android, the ALSA audio interface function, the IPC mechanism and the TDM interface, and also provides the audio acquisition function, bringing the user a better audio experience and more application scenarios.

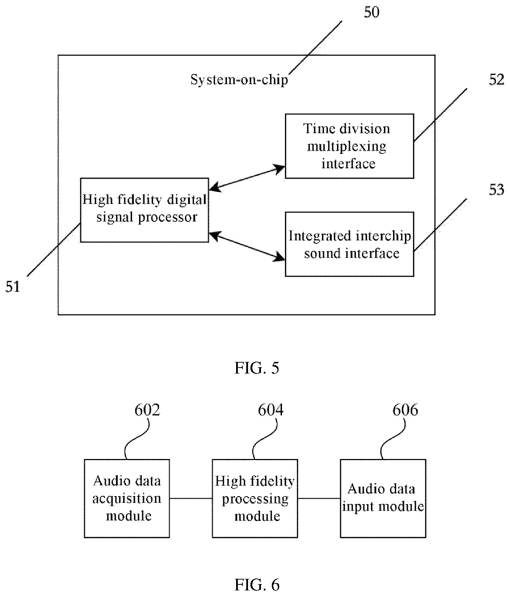

Referring to Fig. 5, a structural block diagram of a system on chip of an embodiment of the present application is shown. A high fidelity digital signal processor 51 HIFI is built in the system-on-chip 50 SOC, and the system-on-chip 50 is used to receive audio data from a sound card device, and process the audio data by using the high fidelity digital signal processor 51, and transmit the processed audio data to an external audio device.

The system-on-chip 50 includes a time division multiplexing TDM interface 52;
The time division multiplexing interface 52 is configured to connect with the external audio device, transmit the processed audio data to the external audio device, and/or, receive an audio signal from the external audio device. The system-on-chip 50 includes an inter-IC sound IIS interface 53;
The inter-IC sound interface 53 is configured to connect with the external audio device, transmit the processed audio data to the external audio device, and/or, receive the audio signal from the external audio device.

The audio data in the sound card device is read from and/or written to the sound card device located in a kernel through a standard advanced Linux sound architecture ALSA audio interface function.

An embodiment of the present application also provides an apparatus for processing audio data. The apparatus for processing audio data is applied to a system-on-chip SOC with a built-in high fidelity digital signal processor HIFI, the apparatus for processing audio data specifically includes the following modules.

An audio data acquisition module, configured to obtain audio data from a sound card device;
A high fidelity processing module, configured to transmit the audio data to the high fidelity digital signal processor, and process the audio data by using the high fidelity digital signal processor;
An audio data output module, configured to transmit the processed audio data to the external audio device by an audio interface of the system-on-chip.

In an exemplary embodiment of the present application, the high fidelity processing module is configured to route the audio data to the high fidelity digital signal processor through an inter-process communication IPC mechanism.

In an exemplary embodiment of the present application, the audio data input module is configured to transmit the processed audio data to the external audio device by using an time division multiplexing TDM interface and/or an inter-IC sound IIS interface of the system-on-chip;
where the external audio device includes at least one of the following: a bluetooth BT device, a tuner Tuner, an audio to bluetooth audio transceiver A2B Transceiver, and an amplifier AMP.

In an exemplary embodiment of the present application, the audio data in the sound card device is written to the sound card device located in the kernel through a standard advanced Linux sound architecture ALSA audio interface function.

Referring to FIG. 6, a structural block diagram of an apparatus for processing audio data of an embodiment of the present application is shown. The apparatus for processing audio data is applied to a system-on-chip SOC with a built-in high fidelity digital signal processor HIFI, the audio data processing apparatus specifically includes the following modules:
an audio data acquisition module 602, configured to obtain audio data from an external audio device by an audio interface of the system-on-chip;
a high fidelity processing module 604, configured to transmit the audio data to the high fidelity digital signal processor, and process the audio data by using the high fidelity digital signal processor;
an audio data input module 606, configured to transmit the processed audio data to a sound card device.

In an exemplary embodiment of the present application, the audio data acquisition module 602 is configured to obtain the audio data from the external audio device by using an time division multiplexing TDM interface and/or an inter-IC sound IIS interface of the system-on-chip;
where the external audio device includes at least one of the following: a bluetooth BT device, a tuner Tuner, an audio to bluetooth audio transceiver A2B Transceiver, and an amplifier AMP.

In an exemplary embodiment of the present application, the high fidelity processing module 604 is configured to route the audio data to the high fidelity digital signal processor through an inter-process communication IPC mechanism.

In an exemplary embodiment of the present application, the audio data in the sound card device is read from the sound card device located in a kernel through a standard advanced Linux sound architecture ALSA audio interface function.

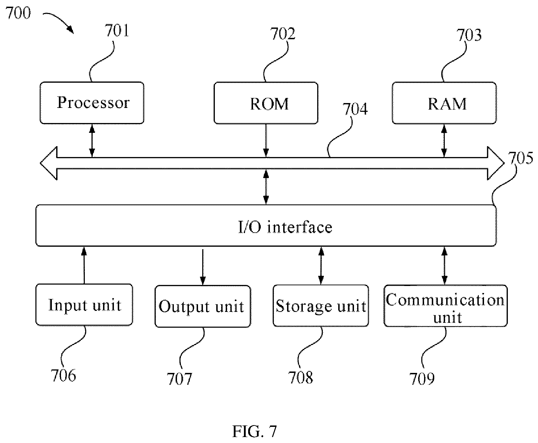

Fig. 7 shows a structural schematic diagram of an electronic device 700 which can be configured to implement embodiments of the present application. The electronic devices are intended to represent various forms of digital computers, such as a laptop, a desktop computer, a workstation, a personal digital assistant, a server, a blade server, a mainframe computer, and other suitable computers. The electronic devices may also represent various forms of mobile apparatuses, such as personal digital processing, a cellular telephone, a smart phone, a wearable device (such as a helmet, glasses, a watch, etc.), and other similar computing apparatuses. Components, connections and relationships thereof, and functions thereof shown herein are used as examples only, and are not intended to limit implementations of the present applicaiton described and/or required herein.

As shown in Fig. 7, the electronic device 700 includes at least one processor 701 and a machine-readable medium communicating with at least one processor 701, such as a read only memory (Read-Only Memory, ROM) 702, a random access memory (Random Access Memory, RAM) 703, etc., where the machine readable medium stores a computer program that can be executed by at least one processor, and the processor 701 can execute a variety of appropriate actions and processes based on a computer program stored in the read only memory ROM 702 or loaded from a storage unit 708 into the random access memory RAM 703. In the RAM 703, various programs and data required for operations of the electronic device 700 may also be stored. The processor 701, the ROM 702, and the RAM 703 are connected to each other via a bus 704. An input/output (Input/Output, I/O) interface 705 is also connected to the bus 704.

A plurality of components in the electronic device 700 are connected to the I/O interface 705, which includes: an input unit 706, for example, a keyboard, a mouse, etc.; an output unit 707, for example, various types of displays, speakers, etc.; a storage unit 708, for example, a magnetic disk, an optical disk, etc.; and a communication unit 709, for example, a network card, a modem, a wireless communication transceiver, etc. The communication unit 709 allows the electronic device 700 to exchange information/data with other devices via a computer network such as the Internet and/or various telecommunication networks.

The processor 701 may be various general-purpose and/or dedicated processing components with processing and computing capabilities. Some examples of the processor 701 include, but are not limited to, a central processing unit (Central Processing Unit, CPU), a graphics processing unit (Graphics Processing Unit, GPU), various dedicated artificial intelligence (Artificial Intelligence, AI) computing chips, various processors running machine learning model algorithms, a digital signal processor (Digital Signal Processor, DSP), and any suitable processors, controllers, microcontrollers, etc. The processor 701 performs the various methods and processes described above, for example, the method for processing audio data.

In some embodiments, the method for processing audio data may be implemented as a computer program which is tangibly contained in a computer readable storage medium, for example, the storage unit 708. In some embodiments, some or all of computer programs may be loaded and/or installed onto the electronic device 700 via the ROM 702 and/or the communication unit 709. When the computer program is loaded into the RAM 703 and executed by the processor 701, one or more steps of the method for processing audio data described above may be executed. Alternatively, in other embodiments, the processor 701 may be configured to perform the method for processing audio data in any other suitable means (e.g., by means of firmware).

Various implementations of systems and techniques described above herein may be realized in a digital electronic circuit system, an integrated circuit system, a field programmable gate array (Field Programmable Gate Array, FPGA), an application-specific integrated circuit (Application Specific Integrated Circuit, ASIC), an application-specific standard part (Application Specific Standard Parts, ASSP), a system of a system-on-chip (System On Chip, SOC), a complex programmable logic device (Complex Programmable Logic Device, CPLD), computer hardware, firmware, software, and/or a combination thereof. These implementations may include: being implemented in one or more computer programs, where the one or more computer programs may be executed and/or interpreted on a programmable system including at least one programmable processor, and the programmable processor may be a dedicated or general-purpose programmable processor which may receive data and instructions from a storage system, at least one input apparatus, and at least one output apparatus, and transmit data and instructions to the storage system, the at least one input apparatus, and the at least one output apparatus.

Computer programs for implementing the methods of the present application may be written in any combination of one or more programming languages. These computer programs may be provided to processors of a general-purpose computer, a dedicated computer, or other programmable data processing apparatuses, to cause functions/operations specified in the flowcharts and/or block diagrams to be implemented when the computer programs are executed by the processor. The computer programs may be executed entirely on a machine, executed partially on a machine, executed partially on a machine as a stand-alone software package and executed partially on a remote machine or executed entirely on a remote machine or a server.

In the context of the present application, a computer readable storage medium may be a tangible medium which may contain or store a computer program for use by or in combination with an instruction execution system, an apparatus, or a device. The computer readable storage medium may include, but is not limited to, an electronic, magnetic, optical, electromagnetic, infrared, or semiconductor system, device, or apparatus, or any suitable combination of the foregoing. Alternatively, the computer readable storage medium may be a machine readable signal medium. More specific examples of the machine readable storage medium may include electrical connections based on one or more wires, a portable computer disk, a hard disk, a random access memory RAM, a read only memory ROM, an erasable programmable read only memory (Erasable Programmable Read Only Memory, EPROM), an optical fiber, portable compact disc read-only memory (Compact Disc Read-Only Memory, CD-ROM), an optical storage device, a magnetic storage device, or any suitable combination of the foregoing.

To provide interaction with a user, the systems and the techniques described herein may be implemented on an electronic device, which has: a display apparatus (e.g., a cathode ray tube (Cathode Ray Tube, CRT) or liquid crystal display (Liquid Crystal Display, liquid crystal display) monitor) configured to display information to the user; and a keyboard and a pointing apparatus (e.g., a mouse or a trackball) by which the user can provide input to the electronic device. Other kinds of apparatuses may also be used to provide interaction with the user; for example, a feedback provided to the user may be any form of sensory feedback (e.g., a visual feedback, an auditory feedback, or a haptic feedback); and input from the user may be received in any form (including acoustic input, voice input, or, haptic input).

The systems and the techniques described herein may be implemented in a computing system which includes a back-end component (e.g., as a data server), or a computing system which includes a middleware component (e.g., an application server), or a computing system which includes a front-end component (e.g., a user computer having a graphical user interface or a web browser through which a user can interact with implementations of the systems and the techniques described herein), or a computing system which includes any combination of such back-end component, middleware component, or front-end component. Components of a system may be interconnected by any form or medium of digital data communication (e.g., a communication network). Examples of the communication network include: a local area network (Local Area Network, LAN), a wide area network (Wide Area Network, WAN), a block chain network and the Internet.

A computer system may include a client and a server. The client and the server are generally far away from each other and usually interact over a communication network. A client-server relationship is created by computer programs which run on corresponding computers and have a client-server relationship with each other. The server may be a cloud server, also referred to as a cloud computing server or a cloud host, which is a host product in a cloud computing service system to address shortcomings of large management difficulty and weak service scalability in traditional physical hosts and virtual private server (Virtual Private Server, VPS) services.

The various embodiments in this specification are described in a progressive manner, with each embodiment focusing on the aspects that differ from the others, and identical or similar parts among the embodiments can be referred to each other.

The embodiments of the present application are described with reference to flowcharts and/or block diagrams of methods, terminal devices (systems), and computer program products according to the embodiments of the present application. It should be understood that each process and/or block in the flowcharts and/or block diagrams, as well as combinations of processes and/or blocks in the flowcharts and/or block diagrams, can be implemented by computer program instructions. These computer program instructions can be provided to processors of a general-purpose computer, a special-purpose computer, an embedded processor, or other programmable data processing terminal devices to produce a machine, such that the instructions executed by the processor of the computer or other programmable data processing terminal devices produce an apparatus for implementing the functions specified in one or more processes and/or blocks in the flowchart and/or block diagram.

These computer program instructions can also be stored in a computer readable memory that directs the computer or other programmable data processing terminal devices to work in a particular manner, such that the instructions stored in the computer readable memory produce a manufactured article including an instruction apparatus that implements the functions specified in one or more processes and/or blocks in the flowchart and/or block diagram.

These computer program instructions can also be loaded onto a computer or other programmable data processing terminal devices, causing a series of operational steps to be performed on the computer or other programmable terminal devices to produce a computer-implemented process, thus, instructions performed on the computer or other programmable terminal devices provide steps for implementing the functions specified in one or more processes and/or blocks in the flowchart and/or block diagram.

In the context, relational terms such as "first" and "second" are only used to distinguish one entity or operation from another entity or operation, without necessarily requiring or implying any such actual relationship or order between these entities or operations. Moreover, the terms "comprise" "includes," or any other variants thereof are intended to encompass non-exclusive inclusion, such that a process, method, item, or terminal device that includes a list of elements not only includes those elements but also includes other elements that are not expressly listed, or includes elements inherent to such a process, method, item, or terminal device. Unless otherwise restricted, elements qualified by the phrase "including a ..." do not exclude the presence of additional such elements in the process, method, item, or terminal device that includes the listed element.

The above provides a detailed introduction to a method for processing audio data and a system-on-chip provided by the present application. Specific examples are used in the context to illustrate the principles and implementation methods of the present application. The descriptions of the above embodiments are only intended to assist in understanding the methods and core ideas of the present application. In summary, the content of the specification should not be understood as limiting the scope of the present application.

## Claims

1. A method for processing audio data, applied to a system-on-chip with a built-in high fidelity digital signal processor, the method comprising:
obtaining audio data from a sound card device;
transmitting the audio data to the high fidelity digital signal processor, and processing the audio data by using the high fidelity digital signal processor; andtransmitting the processed audio data to an external audio device by using an audio interface of the system-on-chip.

2. The method according to claim 1, further comprising: the transmitting the audio data to the high fidelity digital signal processor, comprises:
routing the audio data to the high fidelity digital signal processor through an inter-process communication mechanism.

3. The method according to claim 1, wherein the transmitting the processed audio data to the external audio device by using the audio interface of the system-on-chip, comprises:
transmitting the processed audio data to the external audio device by using at least one of an time division multiplexing interface and an inter-IC sound interface of the system-on-chip;
wherein, the external audio device comprises at least one of the following: a bluetooth device, a tuner, an audio to bluetooth audio transceiver, and an amplifier.

4. The method according to claim 1, further comprising:
the audio data in the sound card device is written to the sound card device located in a kernel through a standard advanced Linux sound architecture audio interface function.

5. A method for processing audio data, applied to a system-on-chip with a built-in high fidelity digital signal processor, the method comprising:
obtaining audio data from an external audio device by using an audio interface of the system-on-chip;
transmitting the audio data to the high fidelity digital signal processor, and processing the audio data by using the high fidelity digital signal processor; and
transmitting the processed audio data to a sound card device.

6. The method according to claim 5, further comprising:
the obtaining the audio data from the external audio device by using the audio interface of the system-on-chip, comprises:
obtaining the audio data from the external audio device by using at least of an time division multiplexing interface and an inter-IC sound interface of the system-on-chip;
wherein, the external audio device comprises at least one of the following: a bluetooth device, a tuner, an audio to bluetooth audio transceiver, and an amplifier.

7. The method according to claim 5, further comprising:
the transmitting the audio data to the high fidelity digital signal processor, comprises:
routing the audio data to the high fidelity digital signal processor through an inter-process communication mechanism.

8. The method according to claim 5, wherein the audio data in the sound card device is read from the sound card device located in a kernel through a standard advanced Linux sound architecture audio interface function.

9. A system-on-chip, a high fidelity digital signal processor is built in the system-on-chip the system-on-chip is configured to receive audio data from a sound card device, process the audio data by using the high fidelity digital signal processor, and transmit the processed audio data to an external audio device.

10. The system-on-chip according to claim 9, wherein the system-on-chip comprises a time division multiplexing interface;
the time division multiplexing interface is configured to connect with the external audio device, to execute at least one of the following: transmitting the processed audio data to the external audio device, receiving an audio signal from the external audio device.

11. The system-on-chip according to claim 9, wherein the system-on-chip comprises an inter-IC sound interface;
the inter-IC sound interface is configured to connect with the external audio device, to execute at least one of the following: transmitting the processed audio data to the external audio device, receiving an audio signal from the external audio device.

12. The system-on-chip according to claim 9, wherein the audio data in the sound card device is read from or written to the sound card device located in a kernel through a standard advanced Linux sound architecture audio interface function.

13. An electronic device, comprising:
at least one processor; and
at least one machine readable medium storing an instruction, in a case where the stored instruction is executed by the at least one processor, enables the at least one processor to execute the method for processing audio data according to any one of claims 1 to 8.

14. A computer readable storage medium with a computer program stored thereon, configured to enable a processor to execute the method for processing audio data according to any one of claims 1 to 8 when the computer program is executed by the processor.
